# EUROPEAN PATENT APPLICATION

(11) **EP 4 474 637 A1**
(43) Date of publication of application: **11.12.2024**
(21) Application number: 23177349.0
(22) Date of filing: 05.06.2023
(51) Int. Cl.: F03D 1/06, B29D 99/00

(54) **SEGMENTED WIND TURBINE BLADE, METHOD FOR ASSEMBLING A SEGMENTED WIND TURBINE BLADE AND WIND TURBINE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A segmented wind turbine blade (30) is provided. The segmented wind turbine blade comprises at least a first blade segment (10) and a second blade segment (20). The segmented wind turbine blade further comprises a first recess (11) formed on the outer contour of the first blade segment (10), and a first protruding cap (12) protruding from the cross-section of the second blade segment (20). The first protruding cap (12) is flush with the outer contour of the second blade segment (20). The first recess (11) is configured for housing the first protruding cap (12), and the first recess (11) and the first protruding cap (12) are configured to be connected to each other such as to assemble the first segmented blade (10) and the second segmented blade (20) to form the segmented wind turbine blade (30).

## Description

The present invention relates to the field of manufacturing wind turbines and in particular wind turbine blades for onshore wind turbines. Furthermore, the invention relates to a segmented wind turbine blade, a method for assembling a segmented wind turbine blade and a wind turbine having such a segmented wind turbine blade.

During the last few years, wind turbine rotor diameters and the nominal power rate of wind turbines have been increasing. Therefore, wind turbine blades are constantly required to be longer. As the blades are longer, it become more difficult to transport them to the installation site. Indeed, wind turbines and in particular onshore wind turbines have to be transported to the installation site. However, transport by rail or road limits the maximum transportable length of a wind turbine blade. As a result, common wind turbine blades are segmented and assembled at the installation site.

Common segmented wind turbine blades are assembled at the installation site using metallic fasteners. Metallic fasteners are heavy and hence add a lot of weight to the segmented wind turbine blades. Alternatively, two blade segments may be connected using a separate connection piece covering the separation line between the two blade segments. This allows saving weight, however, it requires numerous assembling steps and a very high precision while connecting the extra piece with the blade segments. Such assembling techniques are hence difficult and time consuming. Known segmented wind turbine blades may be made of two blade segments slid into each other, wherein adhesive is used. However, by sliding the segments into each other, the previously applied adhesive does not remain homogeneously distributed on the intended adhesive surfaces.

Accordingly, it may be desirable to provide an improved segmented wind turbine blade and a method for assembling a segmented wind turbine blade, which at least mitigate some of the above disadvantages of conventional segmented wind turbine blades and methods for assembling segmented wind turbine blades.

According to a first aspect of the invention, the problem is solved by a segmented wind turbine blade comprising at least a first blade segment and a second blade segment. The segmented wind turbine blade further comprises a first recess formed on the outer contour of the first blade segment, and a first protruding cap protruding from the cross-section of the second blade segment. The first protruding cap is flush with the outer contour of the second blade segment. The first recess is configured for housing the first protruding cap. The first recess and the first protruding cap are configured to be connected to each other such as to assemble the first segmented blade and the second segmented blade to form the segmented wind turbine blade.

In other words, one of the two blade segments may comprise a male connection piece, and the other of the two blade segments may comprise a female connection piece, whereas the female connection piece constitutes a deepening or a notch in the outer contour of the corresponding blade. The segmented wind turbine blade may hence comprise a connection or a joint consisting of a first recess and a first protruding cap. The segmented wind turbine blade may be for an onshore or an offshore wind turbine.

The first and the second blade segment may be configured to be assembled or joint at the installation site. The joint region, in particular when the segments are assembled, may be designated as the split location. Hence, the first protruding cap may protrude beyond the split location of the second blade segment. The first protruding cap is flush with the outer contour of the second blade segment. Advantageously, the first protruding cap may be flush with the outer contour of the second blade segment at the pressure side of the second blade segment. Further, advantageously, the first recess may be at the suction side of the outer contour of the first blade segment. It is advantageous when the protruding spar cap on the pressure side of the outboard segment is bonded into a recess on the pressure side of the inboard segment. Further, it is advantageous when the protruding spar cap on the suction side of the inboard segment is bonded into a recess of the suction side outboard segment. The pressure side is the side of the blade facing the wind in normal operation having a higher pressure than atmospheric pressure. For sake of clarity and description, the axis extending from the suction side to the pressure side will in the following be designated as the vertical axis.

The recess on the outer contour of the first blade segment may be designated as a notch. Therefore, the spar cap can form the ground or "floor" of the recess. The spar cap/recess floor may also be covered by shell glass layers. They are usually encapsulating the spar cap from inside and outside. It is advantageous to keep those layers continuous. The forces will run from the tapered spar cap, through the thickness of the covering outer shell layers and the bonding paste into the overlapping protruding spar cap of the opposite segment. The recess may be a deepening in the outer contour of the first blade segment. The recess may hence form a connection surface. Said connection surface may form an off-set surface of the outer contour of the first blade segment relative to the vertical axis. Plus the thickness needed to form a bond line. Preferably, the recess may be form-fit with the protruding cap. In other words, the recess and the protruding cap may be interlocking. In particular, when the protruding cap is positioned in the recess or housed by the recess, that is, when the segmented wind turbine blade is assembled, the protruding cap may fill the recess such as to reconstitute a continuous outer contour of the first blade segment. That is, when the segmented wind turbine blade is assembled, the protruding cap may be arranged in or at the recess such as to be flush with the outer contour of the first blade segment, too.

In the recess or at the protruding cap, that is, at an overlapping region, adhesive may be applied. As an adhesive, a chemical bonding agent or a thermoplastic welding setup may be used.

The first recess and the first protruding cap may hence form a joint with an overlapping region of the two blade segments. By said overlapping region, a constant load transfer between the protruding cap and the corresponding recess may be created through such a joint.

It is noted that the first blade segment may be formed as a shell, in particular a laminated shell. The second blade segment may also be formed as a shell, in particular a laminated shell.

The first blade segment may be an inboard blade segment, and the second blade segment may be an outboard segment, whereas the inboard blade segment is arranged closer to the center of rotation of the wind turbine blades than the outboard blade segment. Therefore, the first protruding cap of the second blade segment may also be designated as the outboard cap, and the first recess of the first blade segment may be designated as the inboard recess.

Such a segmented wind turbine blade may not need any further connection means, such as metallic fasteners. Hence, such a segmented wind turbine blade may be light in comparison to known segmented wind turbine blades. Further, said segmented wind turbine blade is easily and rapidly assembled.

In particular, due to the combination of a recess and a protruding cap, in opposite directions on pressure side and suction side, it is possible to assemble both blade segments by moving them parallel to the vertical axis and applying a force essentially parallel to the vertical axis. This allows providing a robust segmented wind turbine blade.

The protruding spar caps are tapered over the overlapping joining region. In the "receiving" recess the spar cap is forming the floor or the recess. This spar cap can also be tapered over the length of the joint region. The joining of the tapered spar caps allow a constant shear transfer along the joint length like in a "scarf joint". The taper of the spar caps is described further below.

According to an embodiment of the segmented wind turbine blade, the segmented wind turbine blade further comprises an adhesive. The adhesive is configured to connect the first recess and the first protruding cap with each other. Adhesive is lighter and adds less static moment compared to metallic fasteners, for example. It also allows for a more homogeneous load transfer. Therefore, using adhesive may enable providing larger, more cost effective segmented wind turbine blades and hence wind turbines.

According to an embodiment of the segmented wind turbine blade, the segmented wind turbine blade further comprises a second recess formed on the contour of the second blade segment and a second protruding cap protruding from the cross-section of the first blade segment. The first recess and the second protruding cap are on opposite sides of the first blade segments, wherein the opposite sides are the pressure side and the suction side of the corresponding blade segment. Advantageously, the protruding spar caps are located at the suction side of the root segment and at the pressure side of the tip segment.

The second protruding cap may be arranged at the opposite side of the corresponding blade segment as the first protruding cap. Hence, the opposite facing protrusions advantageously enable joining the blade segments in thickness direction of the segmented wind turbine blade. The thickness direction may correspond to the vertical direction. This advantageously may avoid voids in the bondlines, e.g., in the joint, and may also allow applying controlled pressure on the connection surfaces, i.e., on the bondlines in thickness direction.

According to an embodiment of the segmented wind turbine blade, the first recess and/or the second recess form(s) a connection surface having a textured, roughened or treated surface. This may advantageously increase the mechanical bond between the first blade segment and the second blade segment. At the connection surface and/or at the protruding cap, adhesive may be applied. Hence, providing such a connection surface may allow increasing the adhesive effect of the connection between the first recess and the first protruding cap and/or the second recess and the second protruding cap.

According to an embodiment of the segmented wind turbine blade, the segmented wind turbine blade comprises at least one web extending between the pressure side and the suction side of the first blade segment and/or the second blade segment, wherein the at least one web is configured to mechanically support the first recess and/or the second recess. In other words, as the load on the first protruding cap may be transferred to the first recess of the first blade segment, it may be advantageous to provide a mechanical means configured to further receive and support the load. Hence, the at least one web may be positioned such as to be centered relative to the connection surface formed by the recess.

The web is advantageously always present all along the span to transfer the shear loads from one cap to the other. In this case it also allows to apply the joining pressure, e. g., by clamping the blade from pressure and suction side.

In order to save weight, it may be advantageous that the at least one web has a T-shaped or H-shaped cross-section.

According to an embodiment of the segmented wind turbine blade, the at least one web comprises a bonding flange at the face side of the at least one web. The web advantageously has a flange facing the spar cap, forming a bond line all along the span to transfer the shear loads. The two webs in each segment at the joint location additionally have flanges facing each other to be joint by lamination or adhesive to ensure the transfer of shear forces between both segments.

According to an embodiment of the segmented wind turbine blade, the end face or "cutline" of the at least one web, in particular the bonding flange, is inclined relative to the vertical axis by a first angle, in particular by 30° to 45° or 40° to 50°. It may be advantageous that the at least one web of the first blade segment, that is, of the inboard blade segment, is inclined by 30° to 45° or 40° to 50°. That means, the "cutline" of the webs of the first blade segment and of the second blade segment, at the segmentation location, optionally featuring bonding flanges, is inclined relative to the vertical axis by a first angle, in particular by 30° to 45° or 40° to 50°.

According to an embodiment of the segmented wind turbine blade, the first protruding cap and/or the second protruding cap are/is tapered. The first protruding cap may be designated as an outboard cap whereas the second protruding cap may be designated as an inboard cap. The first protruding cap and/or the second protruding cap may be tapered in thickness over the protruding length. This allows constant load transfer between the spar caps and therefore increases the strength of the connection between the first blade segment and the second blade segment.

According to an embodiment of the segmented wind turbine blade, the first recess and/or the second recess are/is tapered. The first recess may be designated as an inboard recess and the second recess may be designated as an outboard recess. The ground or "floor" of the recess can be formed by a tapered spar cap. The first recess and/or the second recess are at least partly formed by tapered spar caps, in particular tapered spar caps below the recess.

According to an embodiment of the segmented wind turbine blade, each of the two blade segments is one-single piece. In other words, it may be advantageous to provide a first blade segment made of one-single piece. Hence, the first blade segment may comprise a first recess and a second protruding cap. The first blade may hence be a one-single piece shell comprising a first recess and a second protruding cap.

According to an embodiment of the segmented wind turbine blade, the first blade segment is an inboard blade segment. The end face of the at least one web of the first blade segment is inclined relative to the vertical axis towards the second blade segment by a first angle, in particular by 30° to 45° or 40° to 50°. The at least one web of the second blade is inclined relative to the vertical axis by a second angle, whereas the first and the second angle are complementary, such that the at least one web of the first blade segment and the at least one web of the second blade segment form bonding surfaces, in particular bonding flanges. Hence, this allows increasing the connection surfaces between the web of the first blade segment and the web of the second blade segment. Further, this allows a better distribution of the shear forces or pressure forces on the connection between the first blade segment and the second blade segment.

According to an embodiment of the segmented wind turbine blade, the cross-section of the first blade segment and the cross-section of the second blade segment are inclined relative to the vertical axis, in particular such that a division plane between the first blade segment and the second blade segment is inclined by a/the first angle, in particular by 40° to 45° or by 40° to 50°. The division plane may correspond to the split region between the web of the first blade segment and the web of the second blade segment. In other words, the split between the two blade segments can be inclined relative to the thickness direction of the segmented wind turbine blade.

Inclining the split location, i.e., the division plane by a first angle of 40° to 45° or 40° to 50° and in particular by 45° may allow transferring the prevailing flapwise shear loads by compressing loads from the second blade segment to the first blade segment. Inclining the division plane may be achieved by inclining the flange of the shell of the corresponding blade segment. Alternatively or in addition, the end face of the at least one web of the corresponding blade segment may be inclined by the same angle as the division line. That means, the joint line, including flanges or not, between the inboard and outboard web can be inclined. The shell may be joint on the same plane to simplify joining.Hence, the at least one web may be a shear web configured to transfer shear loads. Alternatively or in addition, an inclined flange extending from or attached to the at least one web may be provided. The web joint may be over-laminated by layers to reinforce the joint. The laminate on the webs may be tapered for this purpose. The shell from inboard and outboard segments can also be connected by over-lamination of the potentially as well tapered shell layers.

According to a second aspect of the invention, a method for assembling a segmented wind turbine blade as described hereinabove and hereinafter is provided. The method comprises the following steps:
- At an assembling site, applying an adhesive in the first recess and/or the second recess and/or on the first protruding cap and/or on the second protruding cap such as to form at least one adhesive surface, and
- at the assembling site, assembling the first blade segment and the second blade segment by pressing the first blade segment and the second blade segment, essentially perpendicular to the adhesive surface, together.

In other words, adhesive may be applied both on a surface formed by the first or second recess, e.g., in the tapered recess, and at a face of the corresponding first or second protruding cap. Said face of the corresponding first or second protruding cap may designate the face facing the recess that is, facing the inside of the blade segment or of the shell of the blade segment. Advantageously, small spacers distributed in the joining surfaces can be used in order to guarantee the correct bonding thickness.

The adhesive may be thermoplastic chemical connection material or thermoset chemical connection material. Chemical bonding, being a thermoset chemical connection, may add less weight and static moment to the segmented wind turbine blade compared to known fasteners. With chemical bonding, the load capacity of the connection may not be limited which allows connecting the two blade segments further inboard. Alternatively, this may allow having blades with longer outboard segments which is improving the economics of such a wind turbine.

Alternatively or in addition, adhesive may be applied on a bonding flange of a web, in particular of a shear web or an inclined web. It may also be intended to apply adhesive on the flange or face of the shell of the corresponding blade segment. In particular, adhesive may be applied to the face or flange of the shell of the corresponding blade segment, when an inclined division plane is planned.

In a second method step, the first blade segment and the second blade segment will be assembled together by pressing the first blade segment and the second blade segment, essentially perpendicular to the adhesive surface, together. This allows avoiding sliding the two blade segments into one another or towards one another, hence ensuring that the adhesive remain as applied, e.g., remain homogeneously applied while connecting or assembling the two blade segments.

The latter method allows a time effective and cost effective method for assembling a segmented wind turbine blade. A wind turbine blade assembled according to said method is in particular very robust and resistant.

In case of thermoplastic welding the thermoplastic adhesive or laminate can be already applied to at least one of the blade segments during production of the blade segments. The full spar caps or even the full blade may be laminated using thermoplastic matrix. In field the thermoplastic material of both segments is welded together by applying heat.

According to a third aspect of the invention, a wind turbine comprising at least one segmented wind turbine blade as described hereinabove and hereinafter is provided. Alternatively, the wind turbine comprises at least one segmented wind turbine blade assembled according to the method as described hereinabove.

The features and advantages discussed with respect to the first and second aspect of the invention equally apply to the wind turbine according to the third aspect of the invention.

The aforementioned and other features and advantages of the invention will become further apparent from the following detailed description read in conjunction with the accompanying drawings. In the drawings, like reference numerals refer to like elements.
- Fig. 1: shows a segmented wind turbine blade from a cross-section view according to an exemplary embodiment,
- Fig. 2: shows a perspective view of a segmented wind turbine blade according to an exemplary embodiment,
- Fig. 3: shows a segmented wind turbine blade according to an exemplary embodiment,
- Fig. 4: shows a segmented wind turbine blade according to an exemplary embodiment,
- Fig. 5: shows a perspective view of an exemplary first blade segment of a segmented wind turbine blade, and
- Fig. 6: shows a wind turbine according to an exemplary embodiment.

The figures are for illustrative purposes only and are not true to scale. In principle, identical or like parts, elements and/or steps are provided with identical or similar reference numbers in the figures.

While specific embodiments are disclosed hereinafter, various changes and modifications can be made without departing from the scope of the invention. The present embodiments are to be considered in all respects as illustrative and non-restrictive, and all changes coming within the meaning and equivalency range of the appended claims are intended to be embraced therein.

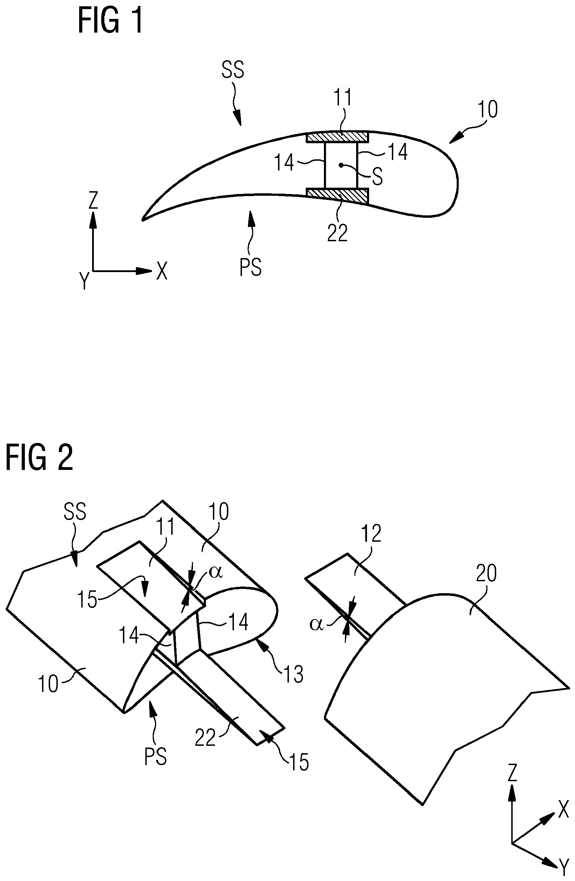

Fig. 1 shows a segmented wind turbine blade 30 from a cross-section view according to an exemplary embodiment of a segmented wind turbine blade 30. The segmented wind turbine blade 30 comprises at least a first blade segment 10, which is located towards the root of the rotor, and a second blade segment 20. Each blade segment may comprise a shell. That is, each blade segment may be hollow. The cross-section of fig. 1 generally corresponds to a division plane 13 between the first blade segment 10 and the second blade segment 20. In particular, fig. 1 shows the first blade segment 10 of the segmented wind turbine blade 30. The first blade segment 10 has a pressure side PS and a section side SS, whereas the pressure side PS and the section side SS are opposite in z-direction (cf. the coordinate system in fig. 1). The pressure side PS is the side of the blade facing the wind in normal operation having a higher pressure than atmospheric pressure. The first blade segment 10 comprises a first recess 11 on the outer contour of the first blade segment 10, and in particular at the suction side SS. It may be advantageous to arrange the first recess 11 on the outer contour at a position where the curvature of the first blade segment 10 is the smallest. The spar caps and therefore the recess are advantageously arranged at the thickest location of the airfoil opposite to each other in order to save material. The thicker the blade, the larger the lever arm. This may allow providing a first recess 11, which is advantageously oriented, essentially perpendicular to the vertical axis, for receiving compressive load from the second blade segment 20. The first blade segment 10 further comprises a second protruding cap 22, whereas said second protruding cap 22 is preferably arranged along the vertical axis, i.e., the z-axis, aligned with the first recess 11. The second protruding cap 22 is preferably flush with the outer contour of the first blade segment 10 at the suction side SS.

The segmented wind turbine blade 30 further comprises a first protruding cap 12 protruding from the cross-section of the second blade segment 20 (not shown in fig. 1, cf. fig. 2). The first recess 11 is configured for housing, preferably in a form-fit manner, the first protruding cap 12. The load from the second blade segment 20 may hence be received or absorbed by the first protruding cap 12 and transferred on to the first recess 11 of the first blade segment 10. The first protruding cap 12 is flush with the outer contour, preferably at the suction side SS, of the second blade segment 20. Therefore, when the first protruding cap 12 is housed in the first recess 11, the first protruding cap 12 may also be flush with the outer contour, preferably at the suction side SS, of the first blade segment 10.

The first recess 11 and the first protruding cap 12 are configured to be connected to each other such as to assemble the first segmented blade 10 and the second segmented blade 20 to form the segmented wind turbine blade 30. The first recess 11 and the first protruding cap 12 may therefore form a joint. As the first blade segment 10 of fig. 1 comprises a second protruding cap 22 protruding from the cross-section of the first blade 10 segment, the second blade segment 20 comprises a corresponding second recess 21. The first recess 11 being configured to interlock with the first protruding cap 12 and/or the second recess 21 being configured to interlock with the second protruding cap 22 may form a joint or a connection between the first blade segment 10 and the second blade segment 20.

Extending between the first recess 11 on the suction side SS and the pressure side PS or, if provided, between the first recess 11 on the suction side SS and the second protruding cap 22 on the pressure side PS, one or more webs 14 may be arranged in the first blade segment 10, i.e., in the shell of the first blade segment 10. Between the first protruding cap 12 on the suction side SS and the pressure side PS or, if provided, between the first protruding cap 12 on the suction SS side and the second recess 21 on the pressure side PS, one or more webs 14 may be arranged in the second blade segment 20, i.e., in the shell of the second blade segment 20. Each of the webs 14 may be configured to mechanically support or reinforce the first recess 11 and/or the second recess 21. Each of the webs may be one-single piece with the shell of the corresponding blade segment 10, 20. The at least one web 14 may extend inwardly inside the shell of the corresponding blade segment 10, 20. In particular, the at least one web may have the same length, i.e., in y-direction, as the corresponding recess 11, 21. This may improve the mechanical support offered by the web 14.

When connecting the two blade segments 10, 20, adhesive may be applied in the first recess 11. Additionally, adhesive will be applied in a second recess 21. That means, advantageously, adhesive is applied in between both recesses and protruding caps. Due to gravity reasons, it is advantageous to apply the bonding paste "on top", meaning on the upper side of the lower protruding cap and on the recess of the upper side. When the blades are joint with the trailing edge facing upwards, the bonding paste can be applied in the same way or the other way around or even on the protruding parts only or on the recesses only. Hence, chemical bonding may be used. Chemical bonding is adding less weight and static moment to the segmented wind turbine blade 30 compared to metallic fasteners, therefore enabling larger, more cost effective wind turbine blades and wind turbines. With chemical bonding, the load capacity of the connection, i.e., the joint, is not limited which allows to connect blade segments further inboard or having wind turbine blades with longer outboard segments which is improving the economics of the wind turbine. In other words, using chemical bonding allows arranging the division plane 13 closer to the wind turbine tower than to the tip or the free end of the segmented wind turbine blade 30.

When using chemical bonding, no maintenance of the joint or connection is required. Metallic fasteners however offer the potential for disassembling the blade in field but this is usually not required and therefore not offering a significant advantage over chemical bonding.

Alternatively, blade segments 10, 20 may be connected or joint using thermoplastic welding. In case the blade segments are joint by thermoplastic welding, the joint could be disassembled.

Fig. 2 shows a perspective view of a segmented wind turbine blade 30 according to an exemplary embodiment. If not specified otherwise, the segmented wind turbine blade of fig. 2 comprises the same elements and/or components as the segmented wind turbine blade 30 of fig. 1.

As shown in fig. 2, the first recess 11 of the first blade segment 10 form a connection surface 15 or (when adhesive has been applied) an adhesive surface 17. The first recess 11 may form an off-set of the outer contour of the first blade segment 10 at the suction side SS. The first recess 11 of fig. 1 is tapered, in particular tapered towards the division plane 13. In other words, the first recess 11 is tapered in thickness. Hence, the recess becomes shallower along the y-axis, i.e., outwardly relative to the rotor hub or blade root. The first recess 11 may hence have an opening angle α defining a taper's tip. The opening angle of the tapered first recess 11 may be between 0,2° and 4°, in particular between 0,5° and 1,5°. 2° and 10° or between 2° and 20°. It is particularly advantageous if the taper ratio of carbon spar caps is 1:100, which corresponds to about 0.57°. For glass spar caps it is usually 1:50, which corresponds to about 1,15°. Accordingly, the first protruding cap 12 formed at the second blade segment 20 may also be tapered, whereas it increases in thickness along the y-axis. The tapered first protruding cap 12 may have an opening angle, which preferably corresponds to the opening angle of the first recess 11. The ground or "floor" of the first recess 11 can be formed by a tapered spar cap. The tapered first protruding cap 12 can be formed by a tapered spar cap, as well.

The first recess 11, which generally forms a connection surface 15, may be textured, roughened or treated. In particular, the connection surfaces 15 formed by the first recess may be treated or textured before an adhesive is applied. This may advantageously improve the adhesion of the adhesive. Alternatively or in addition, a face of the tapered protruding cap 12, 22, in particular the face oriented toward the corresponding connection surface 15, may also be textured, roughened or threated. This may further improve the load capacity of the connection between the two blade segments, i.e., the joint.

The second recess 21 formed at the outer contour, in particular at the suction side SS, of the second blade segment 20 may also be tapered. The second recess 21 may be formed similarly to the first recess 11. Hence, the second recess 21 may be antisymmetric relative to the division plane 13 or the split region to the first recess 11 and additionally on the opposite side of the corresponding blade segment. If the first recess 11 is on the suction side SS of the first blade segment 10, the second recess 21 may preferably be on the pressure side PS of the second blade segment 20, and if the first recess 11 is on the pressure side PS of the first blade segment 10, the second recess 21 is preferably on the suction side SS of the second blade segment 20. The same applies for the protruding caps 12, 22.

However, it is noted that the tapering of the second recess 21 may be different from the tapering of the first recess 11. Alternatively, the second recess 21 has the same opening angle as the first recess 11.

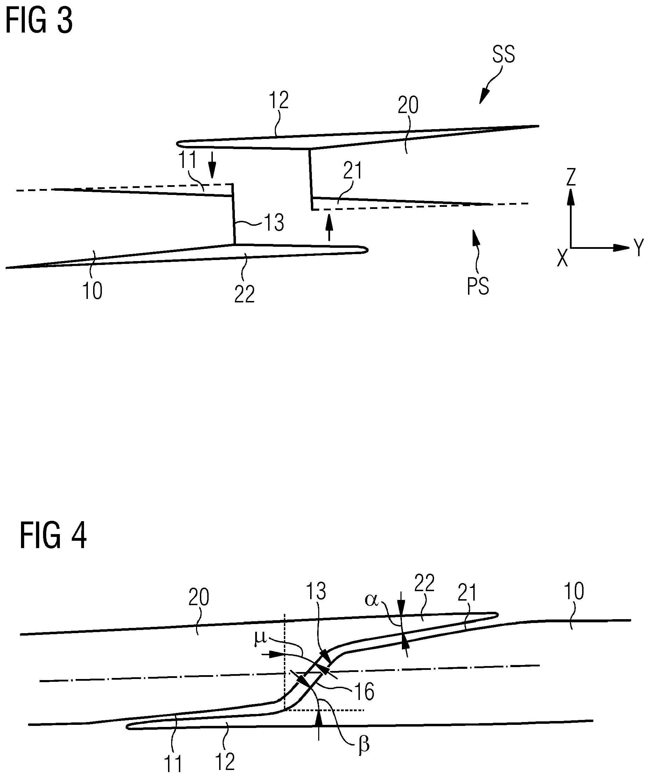

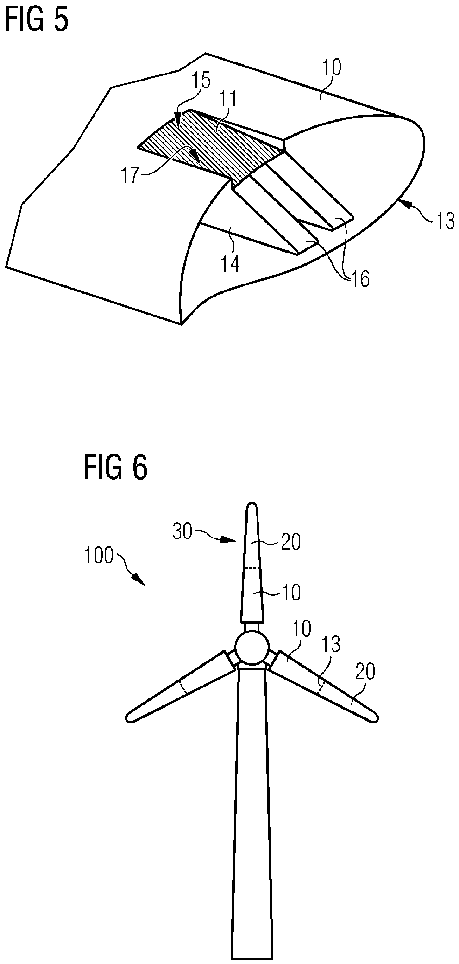

The segmented wind turbine blade 30 of fig. 2 comprises four webs 14, two for each blade segments 10, 20. One web 14 per blade segment 10, 20 would also be possible. The two webs 14 of each blade segments are placed perpendicularly to the connection surface 15 or the adhesive surface 17 (when adhesive is applied). The two webs 14 of the first blade segment 10 are made in one piece with the first blade segment 10, i.e., with the shell of the first blade segment. The two webs 14 may be H-shaped. The two webs may extend inwardly inside the shell of the first blade segment 10. As further described below with respect to figs. 4 and 5, each web may comprise a bonding flange 16 at the face side. The face side of the web 14 being the face of the web 14 is oriented towards the other blade segment 10, 20. In other words, each of the plurality of webs 14 may have a thickness in x-direction, such that it offers a bonding flange 16 on which adhesive may be applied. The thickness of the webs, i.e., the dimension in x-direction, may be optimized with respect to the weight of the segmented wind turbine blade 30 and with respect to the provided bonding flange 16, offering an additional adhesive surface for connecting the two blade segments.

Fig. 3 shows a segmented wind turbine blade 30 according to an exemplary embodiment. In particular, fig. 3 shows a sectional view of the segmented wind turbine blade 30 along the y-axis. In fig. 3, the two blade segments 10, 20 are brought together. The arrows show the directions in which the pressure may be applied in order to connect or assemble the two blade segments 10, 20 together. The division plane 13 in the exemplary embodiment is essentially vertical, i.e., essentially parallel to the z-axis. In other words, the division plane 13 or the split region between the two blade segments 10, 20 is not inclined. The face of the web(s) 14 of the two blade segments 10, 20 may be flush with the division plane 13, such that when the two blade segments 10, 20 are connected or assembled, the faces of the webs 14 of the first blade segment 10 are in contact with the face of the webs 14 of the second blade segment 20.

Fig. 4 shows a segmented wind turbine blade 30 according to an exemplary embodiment. In particular, fig. 4 shows a sectional view of a segmented wind turbine blade 30. Compared to the segmented wind turbine blade 30 of fig. 3, the segmented wind turbine blade 30 of fig. 4 comprises an inclined division plane 13. The shell of the first blade segment 10 may hence have a face oriented towards the second blade segment 20 which is inclined by a first angle β. The face of the shell of the second blade segment 20 may be inclined accordingly, such that when the two blade segments are assembled, each face of the two blade segments are in contact with each other. In other words, the face of the shell of the second blade segment 20 may be inclined with a second angle µ, which is complementary to the first angle β.

The division plane 13 of the first blade segment 10 is preferably inclined by a first angle β of 40° to 50°. The first angle β is preferably bigger than the opening angle α of the tapered first protruding cap 12 and/or of the tapered first recess 11.

Fig. 5 shows a perspective view of an exemplary first blade segment 10 of a segmented wind turbine blade 30. The first blade segment 10 comprises two webs 14, which have an H-shape. Each of the two webs 14 comprises a bonding flanges 16. The bonding flanges 16 offer a supplementary connection surface for connecting the two blade segments 10, 20 with each other. The end faces or "cutline" of the webs 14 and the bonding flanges 16 may be inclined such as to absorb or support compressive loads from the second blade segment 20, i.e., from the outboard blade segment. The end faces or "cutline" of the webs 14 and thus the bonding flanges may be inclined by an angle between 40° and 50°, preferably by an angle of 45°. The inclined end faces of the webs 14 may protrude outside the shell of the first blade segment 10. Alternatively, the inclined end faces of the webs 14 may be placed within the shell of the first blade segment 10. When inclined end faces of the webs are provided, the split location or the division plane 13 between the first blade segment 10 and the second blade segment 20 may not necessarily be inclined, as it is the case in fig. 5. Alternatively, the division line may be inclined by the same angle than the inclination angle of the bonding flanges 16, i.e., of the web 14.

The bonding flanges 16 may hence form an additional connection surface on which adhesive may be applied therefore forming an additional adhesive surface. The connection surface formed by the bonding flanges 16 of the webs 14 may for example be textured, roughened or treated. This may advantageously improve the resistance against compressive loads and in particular against tensile loads from the second blade segment, i.e., from the outboard segment.

It is noted that the bonding flanges 16 may be integral part of the webs 14 or attached to the webs. Inclining the split location and/or the bonding flanges 16, in particular by 45°, may allow transferring the prevailing flawise shear loads by compressing loads from the outboard segment to the inboard segment. Alternatively, inclining the split location by -45° may allow transferring the prevailing flawise shear loads by tensile loads from the outboard segment to the inboard segment.

When inclined end faces of the webs 14 with bonding flanges 16 are provided on the first blade segment 10, it may be preferable to provide, in a symmetrical manner, the same amount of webs 14 with corresponding bonding flanges 16 at the second blade segment 20. The end faces of the webs 14 of the second blade segment 20 may therefore preferably be inclined with an angle being complementary to the inclination angle of the end faces of the webs 14 or bonding flanges 16 of the first blade segment 10.

Fig. 6 shows a wind turbine 100 according to an exemplary embodiment. The wind turbine 100 may preferably be an onshore wind turbine. Each of the three blades of the wind turbine may be segmented wind turbine blades 30. Each segmented wind turbine blades comprises a first blade segment 10 being an inboard blade segment and a second blade segment 20 being an outboard blade segment. The two blade segments are assembled at the division plane 13.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to an advantage. Any reference signs in the claims should not be construed as limiting the scope.

## Claims

1. Segmented wind turbine blade (30), comprising at least a first blade segment (10) and a second blade segment (20), further comprising a first recess (11) formed on the outer contour of the first blade segment (10), and
a first protruding cap (12) protruding from the cross-section of the second blade segment (20), wherein the first protruding cap (12) is flush with the outer contour of the second blade segment (20),
wherein the first recess (11) is configured for housing the first protruding cap (12), and the first recess (11) and the first protruding cap (12) are configured to be connected to each other such as to assemble the first segmented blade (10) and the second segmented blade (20) to form the segmented wind turbine blade.

2. Segmented wind turbine blade (30) according to claim 1, further comprising an adhesive,
wherein the adhesive is configured to connect the first recess (11) and the first protruding cap (12) with each other.

3. Segmented wind turbine blade (30) according to any one of the preceding claims, further comprising
a second recess (21) formed on the contour of the second blade segment (20), and
a second protruding cap (22) protruding from the cross-section of the first blade segment (10),
wherein the first recess (11) and the second protruding cap (22) are on opposite sides of the first blade segments, said opposite sides being the pressure side (PS) and the suction side (SS) of the corresponding blade segment.

4. Segmented wind turbine blade (30) according to any one of the preceding claims,
wherein the first recess (11) and/or the second recess (21) form(s) a connection surface (15) having a textured, roughened or treated surface.

5. Segmented wind turbine blade (30) according to any one of the preceding claims, further comprising at least one web (14) extending between the pressure side (PS) and the suction side (SS) of the first blade segment (10) and/or the second blade segment (20), wherein the at least one web (14) is configured to mechanically support the first recess (11) and/or the second recess (21).

6. Segmented wind turbine blade (30) according to claim 5,
wherein the at least one web (14) comprises a bonding flange (16) at the face side of the at least one web (14).

7. Segmented wind turbine blade (30) according to claim 5 or 6,
wherein the end face of the at least one web (14), in particular the bonding flange (16), is inclined relative to the vertical axis by a first angle (β), in particular by 30° to 45° or 40° to 50°.

8. Segmented wind turbine blade (30) according to any one of the preceding claims,
wherein the first protruding cap (12) and/or the second protruding cap (22) are/is tapered.

9. Segmented wind turbine blade (30) according to any one of the preceding claims,
wherein the first recess (11) and/or the second recess (21) are/is tapered.

10. Segmented wind turbine blade (30) according to any one of the preceding claims,
wherein each of the two blade segments (10, 20) is one-single piece.

11. Segmented wind turbine blade (30) according to any one of the preceding claims, wherein the first blade segment (10) is an inboard blade segment, and
wherein the end face of the at least one web (14) of the first blade segment (10) is inclined relative to the vertical axis towards the second blade segment (20) by a first angle (β), in particular by 30° to 45° or 40° to 50°, and the at least one web (14) of the second blade (20) is inclined relative to the vertical axis by a second angle (µ), whereas the first (β) and the second angle (µ) are complementary, such that the at least one web (14) of the first blade segment (10) and the at least one web (14) of the second blade segment (20) form bonding surfaces, in particular bonding flanges (16).

12. Segmented wind turbine blade (330) according to any one of the preceding claims, wherein the cross-section of the first blade segment (10) and the cross-section of the second blade segment (20) are inclined relative to the vertical axis, in particular such that a division plane (13) between the first blade segment (10) and the second blade segment (20) is inclined by a/the first angle (β), in particular by 40° to 45° or by 40° to 50°.

13. Method for assembling a segmented wind turbine blade (30) according to any one of the claims 1 to 12, comprising the following steps:
• At an assembling site, applying an adhesive in the first recess (11) and/or the second recess (21) and/or on the first protruding cap (12) and/or on the second protruding cap (22) such as to form at least one adhesive surface (17), and
• at the assembling site, assembling the first blade segment (10) and the second blade segment (20) by pressing the first blade segment (10) and the second blade segment (20), essentially perpendicular to the adhesive surface (17), together.

14. Wind turbine (100) comprising at least one segmented wind turbine blade (30) according to claim 1 to 12 or comprising at least one segmented wind turbine blade (30) assembled according to the method of claim 13.
